# EUROPEAN PATENT APPLICATION

(11) **EP 3 828 710 A1**
(43) Date of publication of application: **02.06.2021**
(21) Application number: 20209173.2
(22) Date of filing: 23.11.2020
(51) Int. Cl.: G06F 11/07

(54) **DATA PROCESSING APPARATUS, DATA PROCESSING SYSTEM, DATA PROCESSING METHOD AND CARRIER MEANS**

(30) Priority: 26.11.2019 JP 2019213488
(71) Applicant: Ricoh Company, Ltd., Tokyo 143-8555 (JP)
(72) Inventor: IZUMI, Naotaka, Tokyo, 143-8555 (JP)
(74) Representative: White, Duncan Rohan

(57) **Abstract**

A data processing apparatus (10) executes one or more processes on a plurality of pieces of data. The data processing apparatus (10) includes receiving means (70) for receiving an execution request requesting execution of the one or more processes and a part of data among the plurality of pieces of data; execution means (72) for executing the one or more processes using the part of the data received by the receiving means (70); and notification means (73) for notifying a data transmission source of an execution result indicating a result of the execution of the one or more processes by the execution means (72).

## Description

### BACKGROUND

### Technical Field

The present invention relates to a data processing apparatus that performs one or more processes on a plurality of pieces of data, a data processing system, a data processing method, and carrier means carrying computer readable codes for controlling a computer to carry out the data processing method.

### Description of the Related Art

In offices and the like, in order to improve work efficiency and reduce work mistakes, a system is used that processes data according to a workflow that defines one or more processes to be performed in advance.

In such a system, a large amount of data can be processed efficiently and without work mistakes. On the other hand, if an error occurs during execution of the workflow, the data processing apparatus has to re-execute the workflow from the first process of the workflow. In this case, processes executed so far result in waste.

To address such issue, an apparatus is proposed that performs an operation check on all processes in a workflow before executing workflow processing, and when any process that cannot be performed is detected, transmits a notification indicating that the workflow for which the operation check is requested cannot be used (for example, see JP-2012-243203-A).

However, the above-described apparatus performs the operation check of the workflow at preset intervals. Therefore, in a case in which a time when the operation check is performed and a time when a user wants to execute processes of the workflow, the processes are not always successful. Thus, there is a drawback of lack of real-time performance.

### SUMMARY

In view of the above drawback, an object of the present invention is to provide an apparatus, system, method, and carrier means that enables to check whether a workflow is executed successfully in real time.

In one aspect of the present invention, a data processing apparatus executes one or more processes on a plurality of pieces of data. The data processing apparatus includes: receiving means for receiving an execution request requesting execution of the one or more processes and a part of data among the plurality of pieces of data; execution means for executing the one or more processes using the part of the data received by the receiving means; and notification means for notifying a data transmission source of an execution result indicating a result of the execution of the one or more processes by the execution means.

According to one aspect of the present invention, whether a workflow is executed successfully is checked in real time.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a diagram illustrating and example of a configuration of a data processing system, according to an embodiment of the present invention;
FIGs. 2A and 2B are diagrams, each illustrating a workflow, according to an embodiment of the present invention;
FIG. 3 is an illustration of an example of how the data processing system is used, according to an embodiment of the present invention;
FIG. 4 is a diagram illustrating an example of a hardware configuration of a data processing apparatus, according to an embodiment of the present invention;
FIG. 5 is a block diagram illustrating an example of a hardware configuration of an image forming apparatus, according to an embodiment of the present invention;
FIG. 6 is a block diagram illustrating an example of a functional configuration of the data processing apparatus, according to an embodiment of the present invention;
FIGs. 7A and 7B are diagrams illustrating examples of functional configurations of the image forming apparatus and a distribution server, respectively, according to an embodiment of the present invention;
FIG. 8 is a flowchart illustrating an example of workflow processing performed by the data processing system, according to an embodiment of the present invention;
FIGs. 9A to 9E are diagrams illustrating processes of the workflow, according to an embodiment of the present invention;
FIG. 10 is a flowchart illustrating first operation performed by the data processing apparatus, according to an embodiment of the present invention;
FIG. 11 is a flowchart illustrating second operation performed by the data processing apparatus, according to an embodiment of the present invention; and
FIG. 12 is a diagram illustrating an example of a screen displayed when the data processing apparatus fails in trial distribution, according to an embodiment of the present invention.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

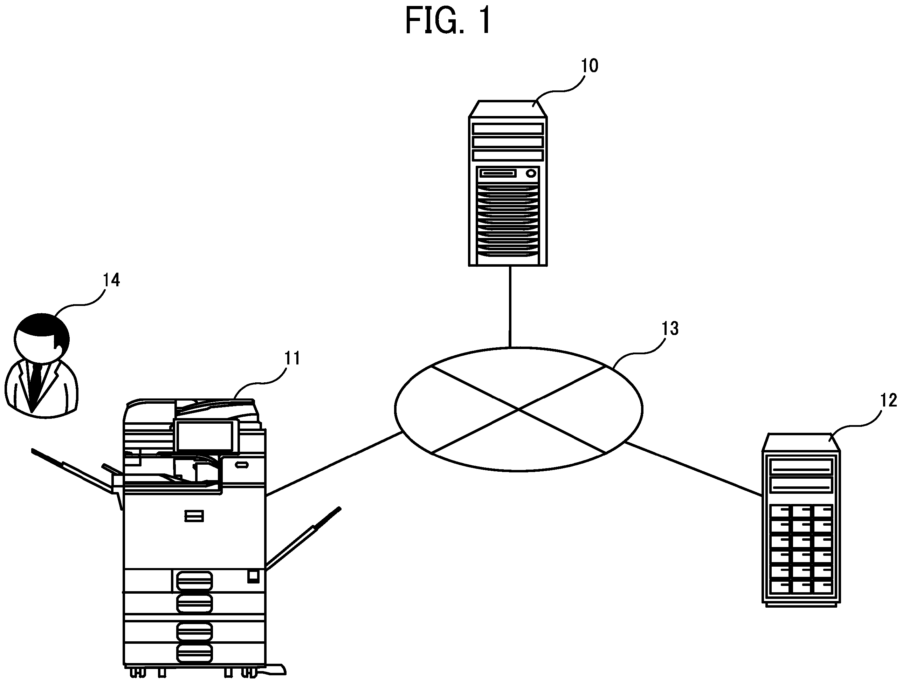

FIG. 1 is a diagram illustrating and example of a configuration of a data processing system, according to the present embodiment. The data processing system includes a data processing apparatus 10. The data processing apparatus 10 executes data processing according to a workflow that defines one or more processes to be performed sequentially.

In another example, the data processing system includes any suitable apparatuses or devices, in addition to the data processing apparatus 10. In the example illustrated in FIG. 1, the data processing system includes an image forming apparatus (multifunction peripheral; MFP) 11 and a distribution server 12. The MFP 11 is an example of a transmission apparatus that executes the workflow in cooperation with the data processing apparatus 10. The distribution server 12 stores data distributed from the data processing apparatus 10. Although in the example illustrated in FIG. 1, the data processing apparatus 10 and the MFP 11 are independent of each other, in another example, the MFP 11 implements functions of the data processing apparatus 10, and the data processing system is configured as the MFP 11 and the distribution server 12.

The number of the data processing apparatus 10, the MFP 11, and the distribution server 12 is not limited to one. In another example, the data processing system include two or more data processing apparatuses 10, MFPs 11, and distribution servers 12. In still another example, the data processing system further includes any other suitable apparatuses or devices such as other devices that execute the workflow in cooperation with the data processing apparatus 10 and a personal computer (PC) used by an administrator, in addition to the data processing apparatus 10, the MFP 11, and the distribution server 12.

The data processing apparatus 10, the MFP 11, and the distribution server 12 are connected to a network 13 and are communicable with each other via the network 13. The network 13 is either a local area network (LAN) or a wide area network (WAN). Further, the network 13 is either a wired network or a wireless network.

The MFP 11 is a device that has plural functions including a scanner function, a copier function, a facsimile function, and a printing function. The MFP 11 provides a user 14 with a workflow selection screen, and executes a part of the workflow according to the workflow selected by the user 14.

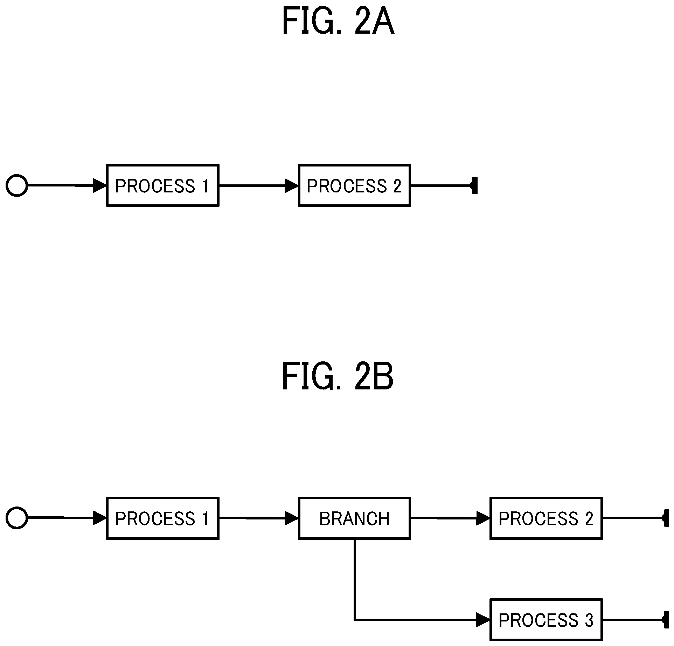

The workflow selectable by the user 14 defines one or more processes and an order in which the one or more processes performed, such as performing "process 1" and thereafter performing "process 2" as illustrated in FIG. 2A. Examples of the processes include, but are not limited to, scanning, PDF conversion, optical character recognition (OCR), folder distribution, e-mail delivery, and File Transfer Protocol (FTP) distribution.

When executing each process one by one, various settings are required to be configured for each process, such as a resolution, a folder, and e-mail address. Such operation of configuring the settings consumes efforts, and leads to an occurrence of many mistakes. By contrast, the use of the workflow saves the necessity of the operation of configuring the settings, thereby reducing efforts, and leading to an occurrence of few mistakes. Therefore, the work efficiency is improved.

In one example, the workflow includes a "branch" as illustrated in FIG. 2B. The "branch" divides the workflow to either "process 2" or "process 3" according to a specified condition. Examples of the condition include, but are not limited to, a condition that pages 1 to 50 of a 100-page document are allocated to the process 2 and pages 51 to 100 are allocated to the process 3. Another example of the condition is a condition that pages from the first page to a page on which a two-dimensional code is printed are allocated to the process 2 and the subsequent pages are allocated to the process 3. These conditions are examples and are not limited to them.

Referring again to FIG. 1, the MFP 11 receives a result of the execution by the data processing apparatus 10 and displays the execution result for user notification.

The data processing apparatus 10 executes the one or more processes defined in the workflow selected by the user 14. In the following, a description is given of an example in which the one or more processes are data distribution. The data distribution can be any of the above-mentioned folder distribution, e-mail distribution, and FTP distribution.

When the MFP 11 scans at least one sheet of a document, in response to receiving data of the scanned sheet(s), the data processing apparatus 10 performs trial distribution using the received data. Although the trial distribution is a distribution on trial basis, not data for a trial distribution but data to be actually distributed is distributed to the distribution server 12, which is a distribution destination defined by the workflow. In the trial distribution, only a part of data among data corresponding to designated plurality of pages or all pages of the document is distributed. The data to be distributed in the trial distribution is either one piece of data or two or more pieces of data.

The data processing apparatus 10 acquires a result of the trial distribution. In response to receiving from the distribution server 12 a response indicating the trial distribution is successful, the data processing apparatus 10 acquires the result indicating a successful distribution. In response to receiving a response indicating the trial distribution is failed from the distribution server 12 or receiving a notification indicating that there is no response even after a certain time period from the distribution server 12, the data processing apparatus 10 acquires the result indicating a distribution failure. The result indicating the distribution failure is acquired as, for example, an error code.

Examples of the distribution failure include, but not limited to the following items:
(1) There is not enough available storage capacity in a storage area of the distribution server 12;
(2) The power of the distribution server 12 is off;
(3) There is no access privilege to the distribution destination; and
(4) The network is congested.

The data processing apparatus 10 transmits to the MFP 11 an execution result indicating whether the processing of the designated workflow is successful, i.e., whether the trial distribution is successful. The MFP 11 displays the execution result transmitted from the data processing apparatus 10 on a control panel of the MFP 11, to notify the user 14 of the execution result.

The user 14 instructs the execution of the selected workflow, after confirming that the execution result indicates that the trial distribution is successful. In one example, in a case in which the execution result indicates that the trial distribution is successful, the MFP 11 and the data processing apparatus 10 automatically continue to execute the workflow. Further, since a part of the document is converted into data in the trial distribution and already distributed to the distribution server 12, the execution of the workflow can distribute data of the subsequent pages.

The MFP 11 scans the document even during the trial distribution and stores data of the scanned document in the MFP 11. In response to receiving the notification indicating that the execution result indicating the trial distribution is successful, the MFP 11 transmits the stored data to the data processing apparatus 10. In response to receiving the data, the data processing apparatus 10 distributes the data of the subsequent pages.

When the execution result indicates that the trial distribution fails, the data processing apparatus 10 transmits a failure notification to the user 14. Further, the data processing apparatus 10 notifies a display device of the data processing apparatus 10 and a PC used by the administrator of the workflow execution failure, a point where the workflow processing has failed, for example. When the execution result indicates the trial distribution has failed, the data processing apparatus 10 instructs the MFP 11 to suspend the scanning of the document. The administrator guesses the cause of failure from the point where the workflow processing has failed and performs maintenance.

The distribution server 12 writes the data received in the trial distribution and the data distributed from the data processing apparatus 10 after the trial distribution is successful, and stores the data in a preset storage area to distribute the data when receiving a distribution request.

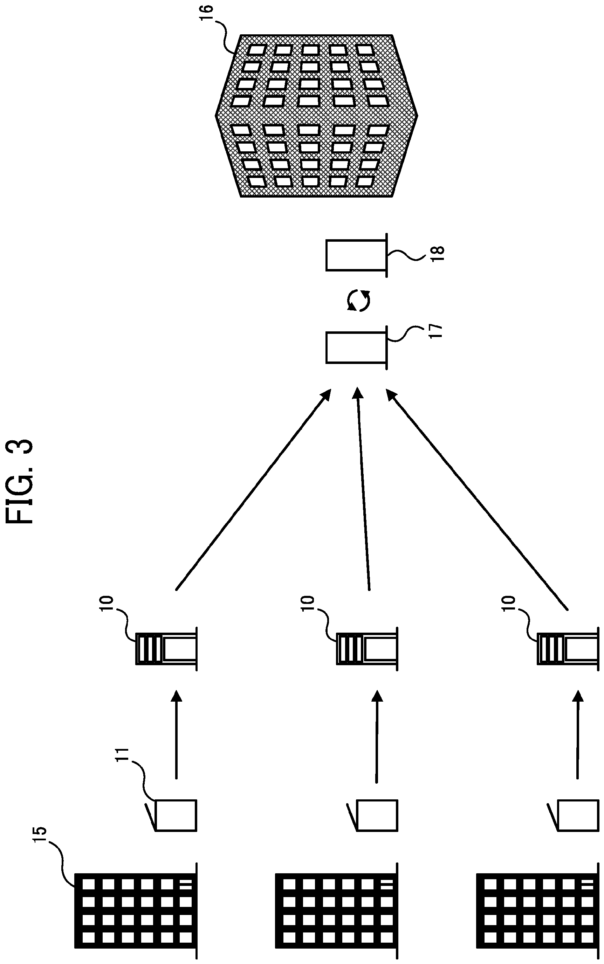

FIG. 3 is an illustration of an example of how the data processing system is used. The data processing system is used, for example, by a sales company in which a head office 16 centrally manages customer information contracted at each of branch offices 15. The branch offices 15 reside both in a certain country (e.g., Japan) and in other countries. The data processing system includes the MFP 11 provided in each of the branch offices 15 and the data processing apparatus 10 provided on the network 13. At the head office 16, a main server 17 and a sub server 18 are provided. The sub server 18 is provided for the purpose of backing up the main server 17.

At each of the branch offices 15, the MFP 11 scans customer information, for example, once a month, designates a workflow, and transmits a workflow execution request and data of the scanned customer information to the data processing apparatus 10. In a case in which the workflow is data distribution to the main server 17, the data processing apparatus 10 distributes the received data to the main server 17. In a case in which the workflow is data distribution to the sub server 18, the data processing apparatus 10 distributes the received data to the sub server 18. When there is a difference between the data in the main server 17 and the data in the sub server 18, the data is updated to the data having the latest update date. Thus, the data stored in the main server 17 and the data stored in the sub server 18 are always kept being same and in the latest state.

The larger the scale of the sales company, the larger the customer information to be delivered once a month. Accordingly, a large number of scans are required every month. When the data is distributed from the branch office 15 overseas, network failure is likely to occur because the data is exchanged between countries.

In a conventional data processing system, a user first does not recognize the failure until all the data is distributed and the distribution process ends. Accordingly, the user has to check the job log to recognize a point or cause of the failure of the workflow. For this reason, there are many cases in which a large number of scans have to be performed again.

The data processing system according to the present embodiment distribute, on trial basis, a part of data actually used in the workflow processing, to enable a user to check in real time whether the workflow processing is successful. This enables a user to notice the failure early. Further, even when the workflow processing fails, the point where the failure has occurred is notified, thereby saving efforts of checking the job log. Furthermore, when a certain process fails, the workflow processing is suspended immediately, and after the failure is resolved, the workflow processing is restarted from the suspended point. Accordingly, there is no need to perform scan again.

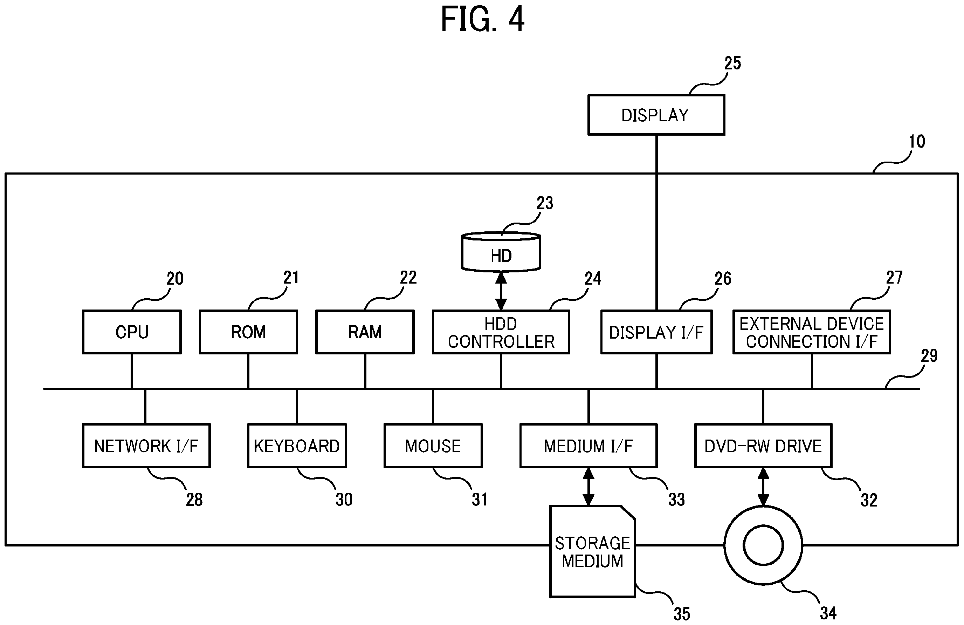

FIG. 4 is a diagram illustrating an example of a hardware configuration of the data processing apparatus 10, according to the embodiment. Since the distribution server 12 has the same or substantially the same configuration as the data processing apparatus 10, the description of a hardware configuration of the distribution server 12 is omitted below. Further the PC and the like used by the administrator also has the same or substantially the same hardware configuration as that of the data processing apparatus 10.

The data processing apparatus 10 includes a central processing unit (CPU) 20, a read only memory (ROM) 21, and a random access memory (RAM) 22, like a general-purpose PC. The data processing apparatus 10 further includes a hard disk (HD) 23, a hard disk drive (HDD) controller 24, a display interface (I/F) 26, and an external device connection I/F 27. The data processing apparatus 10 still further includes a network I/F 28, a bus line 29, a keyboard 30, and a mouse 31. The data processing apparatus 10 yet further includes a digital versatile disk rewritable (DVD-RW) drive 32 and a medium I/F 33. In this example, a display 25 is connected to the data processing apparatus 10, i.e., the display 25 is external to the data processing apparatus 10. In another example, the display 25 is an internal display of the data processing apparatus 10.

The CPU 20 controls overall operation of the data processing apparatus 10. The ROM 21 stores programs such as an initial program loader (IPL) to boot the CPU 20. The RAM 22 provides a work area for the CPU 20. The HD 23 stores various programs and various data. The HDD controller 24 controls reading and writing of various data from and to the HD 23 under control of the CPU 20.

The display 25 displays various information such as a cursor, menu, window, characters, or image. The display I/F 26 is an interface that connects the display 25 to the data processing apparatus 10 and controls display by the display 25. The external device connection I/F 27 is an interface that connects the data processing apparatus 10 to various external devices. Examples of the external devices include, but are not limited to, a universal serial bus (USB) memory and a printer. The network I/F 28 is an interface that enables the data processing apparatus 10 to perform communication via the network 13. Examples of the bus line 29 include, but are not limited to, an address bus and a data bus, which electrically connects the elements such as the CPU 20.

The keyboard 30 is an input device (input means) provided with a plurality of keys that allows a user to input characters, numerals, or various instructions. The mouse 31 is an input device (input means) that allows a user to select a specific instruction or execution, select a target for processing, or move a cursor being displayed. The DVD-RW drive 32 controls reading or writing of various data from or to a DVD-RW 34, which is an example of a removable storage medium. Although in the embodiment, the storage medium is implemented by a DVD-RW, the DVD-RW is just an example. In another example, the storage medium is implemented by a compact disk-recordable (CD-R), a compact disk rewritable (CD-RW), a digital versatile disk-recordable (DVD-R) or the like. The medium I/F 33 controls reading or writing of data from or to a storage medium 35 such as a flash memory.

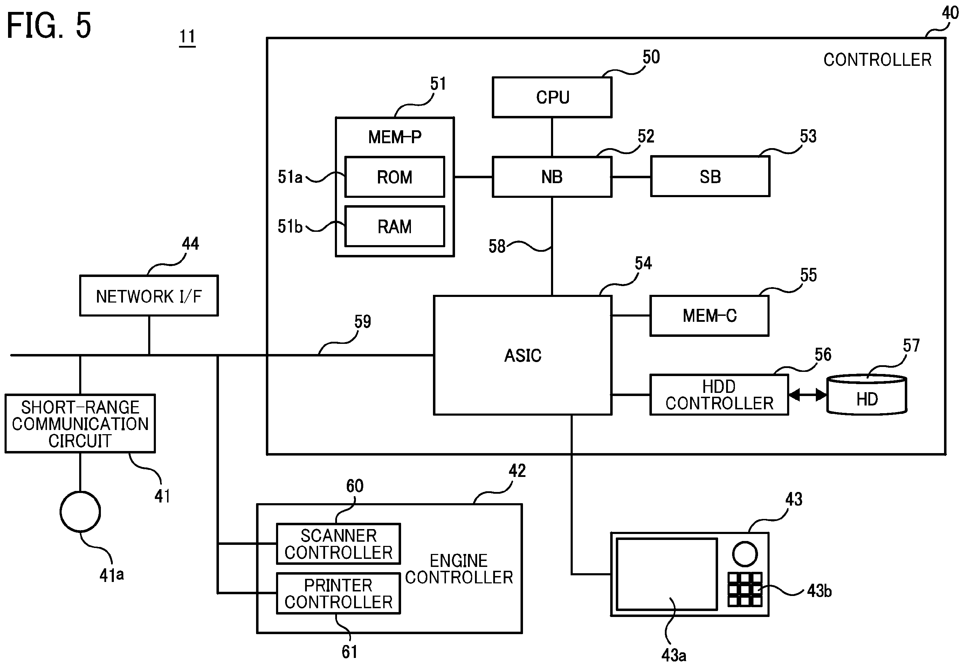

FIG. 5 is a block diagram illustrating an example of a hardware configuration of the MFP 11, according to the embodiment. Although in the embodiment, the MFP 11 is used, in another example, any other suitable apparatus than the MFP 11 is used provided that it has a communication function is capable of transmitting data. Examples of any other suitable apparatus include, but are not limited to, a projector (PJ), an interactive white board (IWB), which is an electronical whiteboard with mutual communication capability, an output device such as a digital signage, a head-up display (HUD) device, an industrial machine, an imaging device, a sound collecting device, a medical device, a networked home appliance, and a connected car. Further examples of any other suitable apparatus include, but are not limited to, a desktop PC, a laptop PC, a wearable PC, a smartphone, a tablet terminal, a game console, and a personal digital assistant (PDA).

The MFP 11 includes a controller 40, a short-range communication circuit 41, an engine controller 42, a control panel 43, and a network I/F 44.

The controller 40 includes a CPU 50 as a main processor of a computer, a system memory (MEM-P) 51, and a north bridge (NB) 52. The controller 40 further includes a south bridge (SB) 53, an application specific integrated circuit (ASIC) 54, and a local memory (MEM-C) 55. The controller 40 still further includes an HDD controller 56 and an HD 57. The NB 52 and the ASIC 54 are connected by an accelerated graphics port (AGP) bus 58.

The CPU 50 functions as a controller that controls overall operation of the MFP 11. The NB 52 is a bridge that connects the CPU 50 with the MEM-P 51, the SB 53, and the AGP bus 58. The NB 52 includes a memory controller that controls reading and writing from and to the MEM-P51, a Peripheral component interconnect (PCI) master, and an AGP target.

The MEM-P51 includes a ROM 51a that stores programs and data for implementing each function of the controller 40, and a RAM 51b. The RAM 51b is used to deploy programs or data, or to store drawing data for printing, for example. For example, the program stored in the RAM 51b is stored in any computer-readable storage medium, such as a CD-ROM, CD-R, DVD, USB memory, and a SD card, in a file format installable or executable by the computer, for distribution.

The SB 53 is a bridge that connects the NB 52 with a PCI device or a peripheral device. The ASIC 54 is an integrated circuit (IC) that includes hardware elements for image processing and is dedicated to an image processing use, and connects the MEM-C 55, the HDD controller 56, the AGP bus 58, and a PCI bus 59 to each other. The ASIC 54 includes a PCI target, an AGP master, an arbiter (ARB) at a core of the ASIC 54, and a memory controller. The memory controller controls the MEM-C 55. The ASIC 54 further includes a plurality of direct memory access controllers (DMACs) and a PCI unit. The DMAC rotates image data with hardware logic, for example. The PCI unit transfers data between a scanner controller 60 and a printer controller 61 via the PCI bus 59. In one example, the ASIC 54 is connected to a USB interface, or the Institute of Electrical and Electronics Engineers (IEEE) 1394 interface.

The MEM-C 55 is a local memory used as a buffer for image data to be copied or a code buffer. The HD 57 is a storage for storing image data, font data used in printing, and form data. The HDD controller 56 controls reading and writing of data from and to the HD 57 under control of the CPU 50. The AGP bus 58 is a bus interface for a graphics accelerator card to accelerate graphics processing. Through directly accessing the MEM-P 51 by high-throughput, speed of the graphics accelerator card is improved.

The short-range communication circuit 41 is a circuit that performs short-range wireless communication in compliance with the near field communication (NFC), the Bluetooth (Registered Trademark), and the like. The short-range communication circuit 41 includes a short-range communication antenna 41a. The engine controller 42 includes the scanner controller 60 and the printer controller 61, and controls a scanner and a printer of the MFP 11.

The control panel 43 includes a display panel 43a such as a touch panel, and operation keys 43b. The display panel 43a displays, for example, current setting values, and a selection screen that allows a user to input instructions. Further, the operation keys 43b include a numeric keypad that receives setting values of conditions relating to image formation such as density setting conditions, and a start key that receives a copy start instruction.

The network I/F 44 is an interface that enables the MFP 11 to perform communication via the network 13. The short-range communication circuit 41 and the network I/F 44 are electrically connected to the ASIC 54 via the PCI bus 59.

The controller 40 controls entire operation of the MFP 11, and controls the MFP to selectively performs a scanner function, a document box function, a copier function, a printer function, and a facsimile function, in response to an instruction to select drawing, communication and/or a specific application through the control panel 43, for example, using a mode switch key. In response to selection of any one of the functions, the MFP 11 transits to a mode corresponding to the selected function.

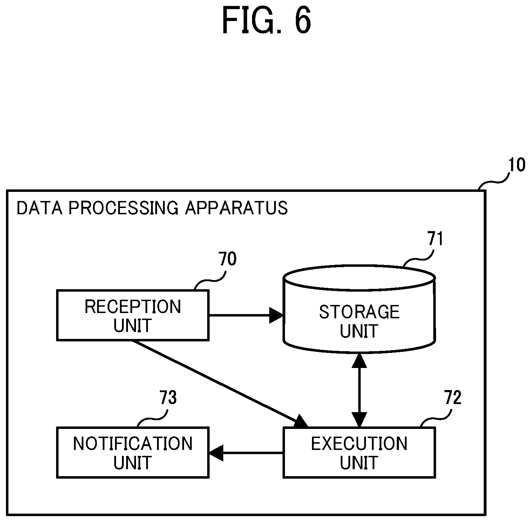

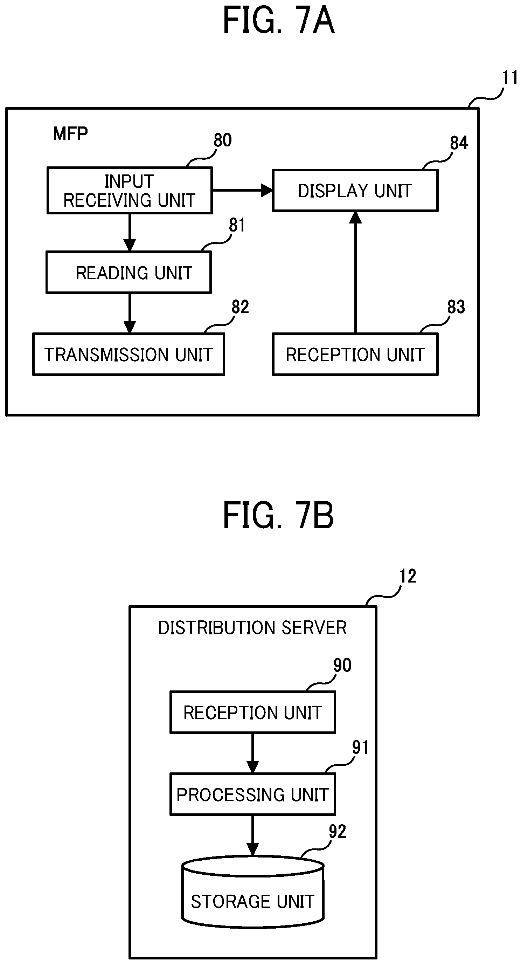

A description is now given of functional configurations of each apparatus with reference to FIG. 6 and FIGs. 7A and 7B. Each of the functional units is implemented by the CPU, when executing according to the program expanded from the HD to the RAM through the HDD controller. In another example, each of the functional unit is implemented by devices such as an application specific integrated circuit (ASIC), a digital signal processor (DSP), a field programmable gate array (FPGA), and conventional circuit components designed to perform the recited functions.

FIG. 6 is a block diagram illustrating an example of the functional configuration of the data processing apparatus 10, according to the embodiment. The data processing apparatus 10 includes a reception unit 70, a storage unit 71, an execution unit 72, and a notification unit 73, each of which may be implemented by instructions from the CPU 20 in cooperation with hardware as illustrated in FIG. 4.

The MFP 11 scans a document including a plurality of pages one by one, converts the scanned one page into data of one page, and transmits the data obtained by the conversion to the data processing apparatus 10. In the above processing, the MFP 11 refers to the workflow and controls the data processing apparatus 10 to perform the trial distribution. Accordingly, the MFP 11 transmits a workflow execution request and a part of data among the plurality pieces of data corresponding to the plurality of pages to the data processing apparatus 10.

The reception unit 70 receives the workflow execution request and the part of data. The reception unit 70 stores the received data in the storage unit 71, and sends the workflow execution request to the execution unit 72. When the trial distribution is successful, the reception unit 70 receives from the MFP 11 the rest of data other than the part of data that has been already received.

The execution unit 72 performs one or more processes on the received part of data according to the workflow designated by the user 14 as the workflow information included in the workflow execution request. In the embodiment, the execution unit 72 performs data distribution to the distribution server 12 as a trial distribution of the part of data.

The execution unit 72 acquires an execution result of the trial distribution from the distribution server 12, which is an example of the distribution destination. The execution unit 72 sends the acquired execution result to the notification unit 73. The notification unit 73 sends a notification indicating the execution result to the MFP 11, which is a transmission source of the data. Further, the notification unit 73 also transmits the notification indicating the execution result to the PC used by the administrator or the like, so that the execution result is displayed on a screen of the PC or the like.

The execution result transmitted to the MFP 11 is information indicating whether the trial distribution succeeded or failed. The execution result displayed on the screen of the PC or the like is information indicating that the trial distribution succeeded or failed, and information indicating a point where the failure occurred in the case of failure. In alternative of or in addition to displaying the execution result, the execution result is output by sound or printing, for example.

When the trial distribution is successful, the execution unit 72 erases the part of data stored in the storage unit 71. Further, the execution unit 72 performs data distribution to the distribution server 12 on the rest of data received by the reception unit 70 according to the workflow designated by the user 14.

FIGs. 7A and 7B are diagrams illustrating examples of functional configurations of the MFP 11 and the distribution server 12, respectively. FIG. 7A illustrates an example of a functional configuration of the MFP 11, and FIG. 7B illustrates an example of a functional configuration of the distribution server 12, according to the embodiment.

The MFP 11 includes an input receiving unit 80, a reading unit 81, a transmission unit 82, a reception unit 83, and a display unit 84. The input receiving unit 80 receives a workflow selection from the user 14. When the workflow selected by the user 14 includes data distribution, the input receiving unit 80 further receives selection of a distribution destination. Then, the input receiving unit 80 receives an instruction to execute the selected workflow.

In a case in which the selected workflow includes document scanning, the reading unit 81 scans a document. When the document includes a plurality of pages, the reading unit 81 converts a scanned page into data every time the reading unit scans one page. The data obtained by the scanning is image data.

When the conversion of the first one or several sheets of the document into image data is completed, the reading unit 81 transmits the image data obtained by the conversion to the data processing apparatus 10 in order to execute the workflow on a trial basis, i.e., performs the trial distribution. Therefore, the conversion of the first one or several sheets, which are a part of the document, into image data is a trigger of starting the workflow execution on a trial basis. For example, the number of image data used in the workflow execution on the trial basis is about one to three. In another example, four or more pieces of image data is used in the workflow execution on the trial basis. This number of image data is specified by the administrator. In the embodiment, since a process to be performed after the scanning in the workflow is distribution, trial distribution is performed. In another example embodiment, when a process performed after the scanning is a process other than the distribution, the process other than the distribution is performed on a trial basis.

The transmission unit 82 refers to the workflow and transmits a workflow execution request and a part of data among the plurality pieces of data corresponding to the plurality of pages to the data processing apparatus 10, to cause the data processing apparatus 10 to perform the trial distribution. The workflow execution request includes an instruction to execute the workflow on a trial basis using the data transmitted together with the workflow execution request. Further, the transmission unit 82 transmits the rest of data to the data processing apparatus 10 in response to the success of the trial distribution.

The reception unit 83 receives the execution result of the trial distribution transmitted from the data processing apparatus 10. The execution result is information indicating whether the trial distribution is successful or fails. In response to receiving the execution result, the reception unit 83 controls the display unit 84 to display the received execution result. The display unit 84 draws and displays the execution result. The display unit 84 further draws and displays a workflow selection screen that allows the user 14 to select a desired workflow and a distribution destination selection screen that allows the user to select a desired distribution destination.

In another example, the MFP 11 further include a storage unit. In this example, the reading unit 81 of the MFP 11 stores the data obtained by scanning, and the transmission unit 82 reads the data from the storage unit and transmits the read data to the data processing apparatus 10. In one example, when the trial distribution fails, the MFP 11 keeps storing the data obtained by the scanning. In another example, when the trial distribution fails, the MFP 11 delete the data obtained by the scanning. Settings as to whether to keep the data obtained by the scanning stored or to delete the data are configured, for example, by using a management tool implemented in the PC or the like used by the administrator.

The distribution server 12 includes a reception unit 90, a processing unit 91, and a storage unit 92. The reception unit 90 receives data distributed from the data processing apparatus 10. The processing unit 91 performs a process of writing and storing the data received by the reception unit 90 in the storage unit 92.

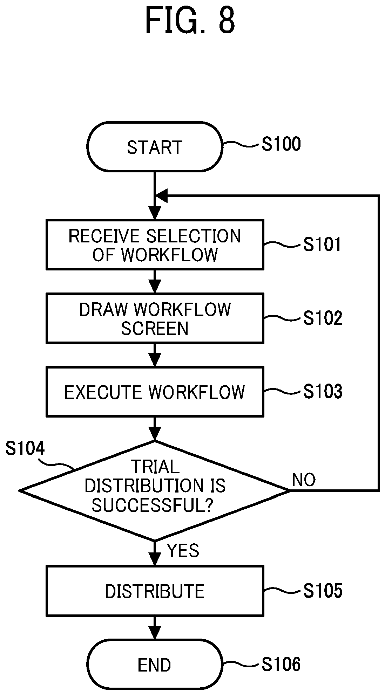

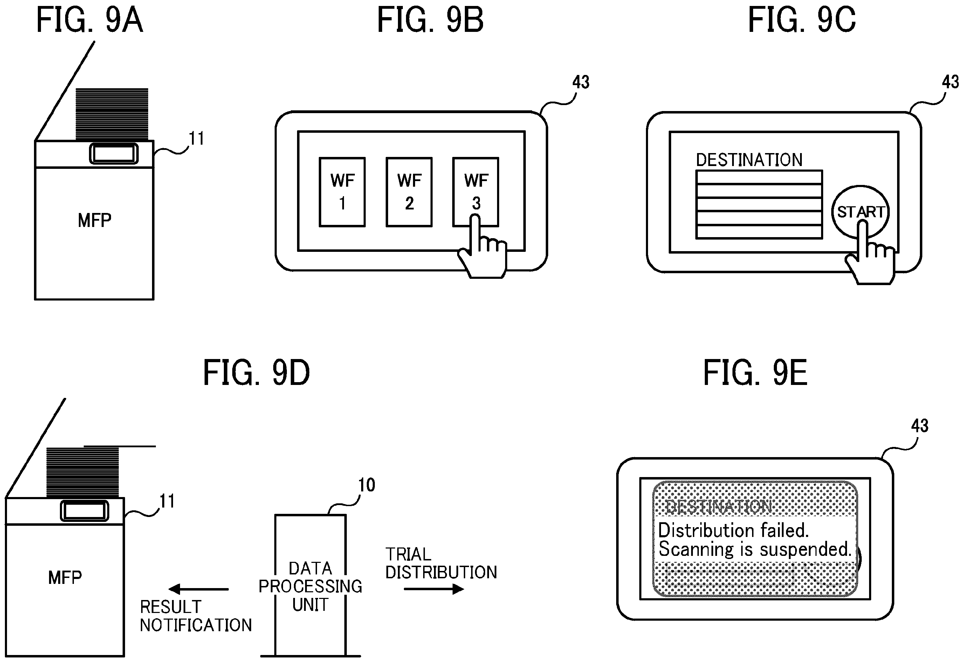

FIG. 8 is a flowchart illustrating an example of workflow processing performed by the data processing system. The workflow (WF) processing starts from step 100, in response to an operation by the user 14 using the MFP 11 of placing a document to be scanned on an automatic document feeder (ADF), for example, as illustrated in FIG. 9A, and opening a workflow selection screen as illustrated in FIG. 9B on the control panel 43.

In step 101, the user 14 selects one of the workflows in the workflow selection screen as illustrated in FIG. 9B, and the MFP 11 receives the selection. In step 102, the MFP 11 draws a WF screen. When the selected workflow includes, for example, data distribution, the MFP 11 draws and displays a screen for selecting a distribution destination as illustrated in FIG. 9C on the WF screen. This screen includes a start button that receives an instruction for executing the selected workflow.

In step 103, the MFP 11 starts executing the workflow in response to an operation by the user 14 of pressing the start button. The workflow is defined to perform "data distribution" after performing "scanning. The MFP 11 scans a document one by one, and when conversion of first one or several sheets that is (are) a part of the document into image data is completed, transmits a part of data of the document to the data processing apparatus 10 together with the workflow execution request for the trial distribution.

In response to receiving the workflow execution request and the part of data, the data processing apparatus 10 refers to a workflow of workflow information included in the workflow execution request. As illustrated in FIG. 9D, the data processing apparatus 10 performs trial distribution of the received part of data based on distribution destination information included in the workflow information.

In step 104, the data processing apparatus 10 determines whether the trial distribution is successful. When the trial distribution fails, the notification unit 73 of the data processing apparatus 10 transmits to the MFP 11 a notification indicating that the trial distribution has failed, and instructs the MFP 11 to suspend the scanning. The operation returns to step 101 so that another workflow is selected. The screen presented to the user 14 at the MFP 11 is a screen as illustrated in FIG. 9E. The MFP 11 holds data obtained by scanning and conversion so far for execution of a workflow selected next.

When the trial distribution is successful in step 104, the MFP 11 transmits, to the data processing apparatus 10, data of the remaining pages that are scanned and stored during the trial distribution. The data processing apparatus 10 distributes the data of the remaining pages in step 105. When the data processing apparatus 10 distributes data of all pages scanned by the MFP 11, the operation proceeds to step 106, and the workflow processing ends. The data processing apparatus 10 transmits a notification indicating that the workflow execution is completed to the MFP 11. The MFP 11 controls the control panel 43 to display a screen indicating that the workflow execution is completed.

Although in the description provided above with reference to FIG. 8, another workflow is to be selected when the trial distribution is failed, this is just an example. In another example, the data processing apparatus 10 gives an instruction to suspend the scanning, transmits a notification indicating a point where the workflow fails to the administrator, in addition to transmitting the notification indicating that the trial distribution fails. In this example, the data processing apparatus 10 suspends the processing until maintenance by the administrator is completed, and after the maintenance is completed, the data processing apparatus 10 restarts the execution of the workflow from the suspended point.

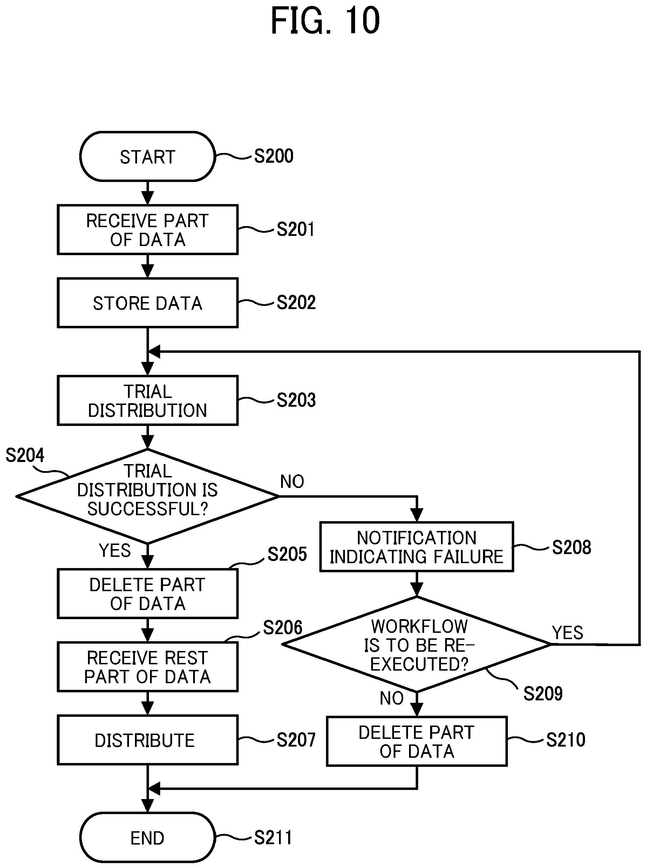

FIG. 10 is a flowchart illustrating first operation performed by the data processing apparatus 10, according to the embodiment. The data processing apparatus 10 starts operation from step 200 in response to receiving the workflow execution request including the workflow information. The data processing apparatus 10 receives the part of data required for trial distribution from the MFP 11 in step 201. Since one piece of data suffices for the trial distribution, it is sufficient for the data processing apparatus 10 to receive one piece of data.

In step 202, the data processing apparatus 10 stores the received data. so that in a case in which the trial distribution fails, the trial distribution is performed again after the maintenance.

In step 203, the data processing apparatus 10 refers to the workflow information included in the workflow execution request, to identify a process to be performed, and checks a distribution destination when the identified process is data distribution. Then, the data processing apparatus 10 performs the trial distribution using the received data to the checked distribution destination. In the trial distribution, when the data distribution defined in the workflow is a folder distribution, the data is distributed to a designated folder, and when the data distribution is an e-mail distribution, the data is distributed to a designated e-mail address.

In step 204, the data processing apparatus 10 determines whether the trial distribution is successful. Whether the trial distribution is successful is determined by whether a notification indicating the successful trial distribution is received or an error code is returned.

When the determination result in step 204 indicates that the trial distribution is successful, the operation proceeds to step 205, and the data processing apparatus 10 erases the part of the data stored in the storage unit 71. This is because the part of data has been distributed in the successful trial distribution to the distribution server 12, and therefore the part of data is not required to be kept.

The data processing apparatus 10 receives the rest of data from the MFP 11 in step 206, and distributes the received rest of data to the distribution server 12 in step 207. After distributing data of all the pages scanned by the MFP 11, the operation proceeds to step 211 and processing based on the workflow ends.

When the determination result in step 204 indicates that the trial distribution fails, the operation proceeds to step 208, and the data processing apparatus 10 transmits a notification indicating that the trial distribution has failed to the MFP 11. Further, the data processing apparatus 10 transmits a notification indicating the trial distribution failure, a part where the trial distribution has failed, to the PC or the like used by the administrator. Further, the data processing apparatus 10 instructs the MFP 11 to suspend the scanning of the document.

The data processing apparatus 10 determines whether to re-execute the workflow in step 209. When the user 14 selects a different distribution destination or a different workflow and instructs the execution of the workflow specifying the different destination of the execution of the different workflow, the data processing apparatus 10 determines that the workflow is to be re-executed. When the determination result indicates that the workflow is to be re-executed, the operation returns to step 203, and the data processing apparatus 10 performs the trial distribution using the part of data stored in the storage unit 71.

When the determination result in step 209 indicates that the workflow is not to be re-executed, since the trial distribution is not to be performed, the operation proceeds to step 210, and the data processing apparatus 10 erases the part of data stored in the storage unit 71, and ends the operation in step 211.

The operation described above with reference to FIG. 10 is workflow processing that does not include a "branch" illustrated in FIG. 2A. As illustrated in FIG. 2B, in the workflow processing including the "branch", there are two cases depending on data, one being performing the "process 1" and thereafter performing the "process 2", the other being performing the "process 1" and thereafter performing the "process 3". Accordingly, in addition to performing trial distribution on a flow from the "process 1" to the "process 2", further trial distribution is required to be performed on a flow from the "process 1" to the "process 3". The larger the number of branches, the larger the number of trial distribution.

According to one example operation, when one piece of data is first received as the part of data, the trial distribution is performed on all of a plurality of flows by using the received data. According to another example operation, the trial distribution is performed using one pieces of data that is first received for each flow.

A description is given using a specific example. In the following example, it is assumed that the workflow is set to scan 100 pages of a document, distribute 1 to 50 pages to a "folder 1", and distribute 51 to 100 pages to a "folder 2". In this case, a condition of the branch is whether the number of pages exceeds the specified number of pages, i.e., 50 pages.

According to the one example operation described above, in response to receiving the data of the first page, the data processing apparatus 10 performs the trial distribution using the received data of the first page to both the folder 1 and the folder 2, and checks whether the trial distribution is successful. Note that, according to the one example operation described above, the data of the first page is not required to be stored in the folder 2. Accordingly, when data of pages 51 to 100 are stored later, the data of the first page is overwritten with the data of pages 51 to 100.

When the distribution to the folder 1 is successful and the distribution to the folder 2 fails in the trial distribution, the data processing apparatus 10 transmits a notification indicating that the distribution to the folder 2 has failed, and prompts a user to change to the distribution destination to a different one. In this case, the folder 2 is grayed out as being not selectable. The change of the distribution is just one example, and in another example the workflow is changed. This also applies to a case in which the distribution to the folder 1 fails and the distribution to the folder 2 succeeds in the trial distribution, or a case in which the distribution to both the folder 1 and the folder 2 fails in the trial distribution.

In this case, the trial distribution failure is addressed by, for example, distributing data to the destination for which the trial distribution is successful and by changing the destination for which the trial distribution has failed to a different destination. In one example, the distribution to the destination for which the trial distribution has failed is performed again to the same destination after maintenance is completed.

According to the another example operation described above, in response to receiving the data of the first page, the data processing apparatus 10 performs the trial distribution using the received data of the first page to the folder 1, and checks whether the trial distribution is successful. When the trial distribution is successful, the data processing apparatus 10 receives data of page 2 to page 50 and distributes the data of page 2 to page 50 to the folder 1. Next, in response to receiving the data of the 51st page, the data processing apparatus 10 performs the trial distribution using the received data of the 51st page to the folder 2, and checks whether the trial distribution is successful. When the trial distribution is successful, the data processing apparatus 10 receives data of page 52 to page 100 and distributes the data of page 52 to page 100 to the folder 2.

In a case in which the data is output image data by scanning, the number of pages of the data is obtained by, for example, performing character recognition by OCR and extracting a number written at a predetermined position of an image represented by the image data.

The number of pages is just one example of the condition of the branch, and in another example, the condition of the branch is a content written on a page. In this example, the workflow is branched so that a page(s) containing a particular character is (are) distributed to the folder 1 and a page(s) not containing the particular character is (are) distributed to the folder 2. In another example, the workflow is branched so that a page(s) containing a particular figure such as a two-dimensional code is (are) distributed to the folder 1 and a page(s) not containing the particular figure is (are) distributed to the folder 2.

In these cases, for example, character recognition by OCR is performed to detect whether the particular character is contained, and template matching is performed to detect whether the particular character or the particular figure is contained. In another example, the workflow is branched so that a page(s) is (are) distributed to the folder 1 until the page containing the particular character or figure is detected and a subsequent page(s) after the detection is (are) distributed to the folder 2.

The number of "branches" in the workflow is not limited to one, and two or more "branches" are provided, for example.

When the distribution to the folder 1 is successful and the distribution to the folder 2 fails in the trial distribution, the data processing apparatus 10 transmits data of page 2 to page 50 to the folder 1 and thereafter transmits a notification indicating that the distribution to the folder 2 has failed, transmits an instruction for suspending scanning to the MFP 11, and prompts a user to change to the distribution destination to a different one. Also in this case, the folder 2 is grayed out as being not selectable. The change of the distribution is just one example, and in another example the workflow is changed. Since the data of pages 1 to 50 has already been distributed to the folder 1, a workflow including the scanning as "process 1", the "branch", and the distribution to the folder 1 as "process 2" is displayed as being selectable.

When the distribution to the folder 1 fails in the trial distribution, the data processing apparatus 10 transmits a notification indicating that the distribution to the folder 1 has failed to the MFP 11, transmits an instruction for suspending scanning to the MFP 11, and prompts the user to change to the distribution destination to a different one. In this case, the folder 1 is grayed out as being not selectable. The change of the distribution is just one example, and in another example the workflow is changed.

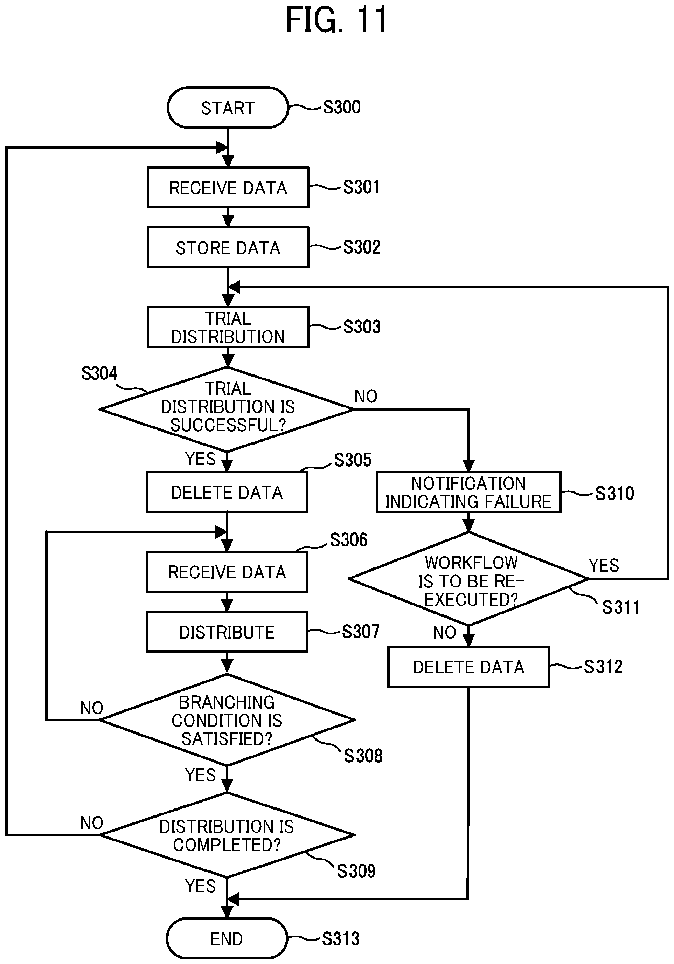

FIG. 11 is a flowchart illustrating second operation performed by the data processing apparatus 10, according to the embodiment. The data processing apparatus 10 starts operation from step 300 in response to receiving the workflow execution request including the workflow information. The data processing apparatus 10 receives one pieces of data required for trial distribution in step 301.

In step 302, the data processing apparatus 10 stores the received data in the storage unit 71. In step 303, the data processing apparatus 10 refers to the workflow information included in the workflow execution request, to identify a process to be performed. When the identified process is data distribution, the data processing apparatus 10 check a distribution destination. Then, the data processing apparatus 10 performs the trial distribution using the received data to the checked distribution destination.

In step 304, the data processing apparatus 10 determines whether the trial distribution is successful. Whether the trial distribution is successful is determined by whether a notification indicating the successful trial distribution is received or an error code is returned.

When the data processing apparatus 10 determines in step 304 that the trial distribution is successful, the operation proceeds to step 305, and the data processing apparatus 10 erases the data stored in the storage unit 71. The data processing apparatus 10 receives data from the MFP 11 in step 306, and distributes the received data in step 307. In step 308, the data processing apparatus 10 determines whether a branch condition is satisfied. Referring to the above-described example, the data processing apparatus 10 determines whether the distributed page exceeds 50 pages. When the data processing apparatus 10 determines that the branch condition is not satisfied, the data processing apparatus 10 continues the data distribution. When the data processing apparatus 10 determines that the branch condition is satisfied, the operation returns to step 301. Then, the data processing apparatus 10 receives data of page 51 as data to be used for trial distribution, stores the received data, and performs trial distribution.

When the determination result in step 304 indicates that the trial distribution fails, the operation proceeds to step 310, and the data processing apparatus 10 notifies the MFP 11 of the failure. Further, the data processing apparatus 10 notifies the PC or the like used by the administrator of the failure of the trial distribution and a part where the trial distribution has failed. Further, the data processing apparatus 10 instructs the MFP 11 to suspend the scanning of the document.

The data processing apparatus 10 determines in step 311 whether to re-execute the workflow. When the user 14 selects a different distribution destination or a different workflow and instructs the execution thereof, the data processing apparatus 10 determines that the workflow is to be re-executed. When the determination result indicates that the workflow is to be re-executed, the operation returns to step 303, and the data processing apparatus 10 performs the trial distribution using the part of data stored in the storage unit 71.

When the determination result in step 311 indicates that the workflow is not to be re-executed, since the trial distribution is not to be performed, the operation proceeds to step 312, and the data processing apparatus 10 erases the part of data stored in the storage unit 71, and ends the operation in step 313.

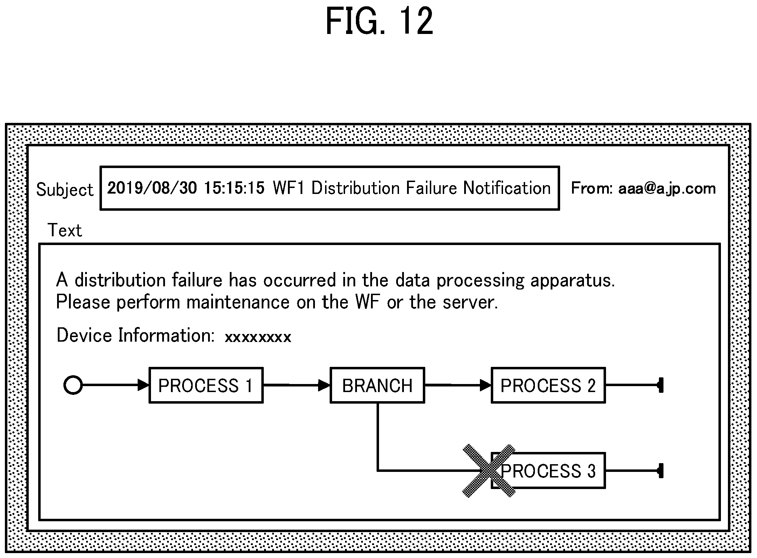

FIG. 12 is a diagram illustrating an example of a screen displayed on the PC used by the administrator when the data processing apparatus 10 fails in the trial distribution, according to the embodiment. When the administrator uses the data processing apparatus 10, this screen can be displayed on the display 25.

The data processing apparatus 10 is connected to the PC used by the administrator via the network 13, and a notification is transmitted to the PC by, for example, e-mail. E-mail is just one example, and in another example, the notification is transmitted by any other suitable known technique.

The screen includes a subject, text, and an email address of a server administrator set in the data processing apparatus 10. The subject includes indication of a notification of failure of trial distribution and the date and time of the failure. In one example, the server administrator and the administrator are the same person. In another example, the server administrator and the administrator are different persons. The administrator recognizes when the trial distribution failed by looking at the subject on the screen.

The text includes a workflow flow diagram and provides a visual indication of a point where the failure has occurred. The text further includes information on a device used in the workflow, and information on how to address the failure such as "Please perform maintenance of the WF or the server." The information on how to address the failure is registered in association with an error code and a point of the failure location. Accordingly, the information on how to address the failure is acquired from the registered information according to the error code obtained when the trial distribution fails. In the example illustrated in FIG. 12, a cross mark is superimposed on indication of the "process 3", to implement visual recognition that the failure has occurred in the "process 3".

The administrator performs maintenance on the WF or the server according to the content of the text displayed on the screen. This enables the administrator to guess the cause of the failure and address the failure, without checking the error log.

Although the description given above of an example case in which when the workflow includes a "branch", the trial distribution is performed for all of the flows, alternatively, there is case in which all of the flows are not used depending on data to be processed. In addition, there is a case in which the user 14 wants the trial distribution to be performed only on a flow including processes subsequent to a predetermined branch. Therefore, the user 14 is allowed to select on the control panel 43 a desired branch included in the flow on which the user wants the trial distribution is to be performed, before or during scanning.

By allowing the user 14 to select the desired branch included in the flow on which the user wants the trial distribution is to be performed during scanning, the trial distribution is performed only on a particular flow that branches according to a particular page, data size, barcode, or the like. In the example present embodiment, selection of a branch included in a flow on which the trial distribution is to be performed is not required in advance, and the trial distribution is performed during scanning on the flow on which the user 14 wants the trial distribution is to be performed.

In one example, the data processing system includes two or more data processing apparatuses 10 and MFPs 11, the two or more data processing apparatuses 10 and MFPs 11 are configured to execute the same workflow.

When the trial distribution fails, for example, a first data processing apparatus is switched to a second data processing apparatus, and the second data processing apparatus distributes data to the same distribution destination to which the first data processing apparatus has performed trial distribution. This processing enables to determine whether the failure is due to the data processing apparatus or the failure is due to the distribution destination. This switching is set by using a management tool.

Further, in one example, when the trial distribution fails in a certain workflow, a notification indicating that the certain workflow in which the trial distribution fails may not be available to the MFP configured to the same workflow. Furthermore, in one example, when the certain workflow is selected in the MFP, a warning is displayed on the control panel. This allows a user to recognize in advance that the certain workflow is not available.

Although the present disclosure has been described with the above-described embodiments as the data processing apparatus, the data processing system, the data processing method, and carrier means carrying a computer readable code for controlling a computer to perform the data processing method, the present invention is not limited to the above-described embodiments. The present invention can be modified within the scope of those skilled in the art, such as other embodiments, additions, modifications, deletions, etc., and as long as effects of the present invention are exhibited in any of the embodiments, the embodiments are included in the scope of the present invention.

Therefore, a method performed by the data processing system, a computer-readable storage medium storing the above-described program, a server apparatus that provides the program via a network, and the like can also be provided.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention may be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. As the present invention may be implemented as software, each and every aspect of the present invention thus encompasses computer software implementable on a programmable device. The computer software may be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. A data processing apparatus (10) that executes one or more processes on a plurality of pieces of data, the data processing apparatus (10) comprising:
receiving means (70) for receiving an execution request requesting execution of the one or more processes and a part of data among the plurality of pieces of data;
execution means (72) for executing the one or more processes using the part of the data received by the receiving means (70); and
notification means (73) for notifying a data transmission source of an execution result indicating a result of the execution of the one or more processes by the execution means (72).

2. The data processing apparatus (10) of claim 1, further comprising
storage means (71) for storing the part of data received by the receiving means (70), wherein
when the execution result indicates that the execution of the one or more processes is successful, the execution means (72) erases the part of data from the storage means (71), and
the receiving means (70) receives a rest of the plurality of pieces of data other than the part of data.

3. The data processing apparatus (10) of claim 1 or 2, wherein
when the execution result indicates a failure of the execution of the one or more processes, the notification means (73) instructs the data transmission source to suspend execution of a part of the one or more processes.

4. The data processing apparatus (10) of any one of claims 1 to 3, wherein
when the execution result indicates a failure of the execution of the one or more processes, the notification means (73) transmits a notification indicating which of the one or more processes fails to a device used by an administrator.

5. The data processing apparatus (10) of any one of claims 1 to 4, further comprising storage means (71) for storing the part of data received by the receiving means (70), wherein
when the execution result indicates a failure of the execution of the one or more processes, the receiving means (70) receives another execution request of one or more processes different from the one or more processes, and
the execution means (72) executes the different one or more processes using the part of data stored in the storage means (71).

6. The data processing apparatus (10) of any one of claims 1 to 5, wherein
when the one or more processes include a branch, the receiving means (70) receives an execution request requesting an execution of a flow including processes subsequent to a designated branch, and
the execution means (72) executes processing of the flow.

7. A data processing system comprising:
a transmission apparatus (11) configured to transmit a plurality of pieces of data; and
the data processing apparatus (10) according to any one of claims 1 to 6.

8. The data processing system of claim 7, wherein
the transmission apparatus (11) is an image forming apparatus configured to read a document and convert the read document into a plurality of pieces of data, and
when the transmission apparatus (11) completes conversion of at least one sheet of the document into at least one piece of data, the transmission apparatus (11) transmits, to the data processing apparatus (10), an execution request requesting execution of the one or more processes and the at least one piece of data that is converted as a part of data among the plurality of pieces of data, so that the data processing apparatus (10) performs the one or more processes on a trial basis.

9. The data processing system of claim 8, wherein
the image forming apparatus continues scanning the document until the image forming apparatus (11) receives an instruction from the data processing apparatus (10) to suspend transmission of data.

10. A method of processing data performed by a data processing apparatus (10) that executes one or more processes on a plurality of pieces of data, the method comprising:
receiving (S200, S201) an execution request requesting execution of the one or more processes and a part of data among the plurality of pieces of data;
executing (S203) the one or more processes using the received part of the data; and
notifying (S208) a data transmission source of an execution result indicating a result of the execution of the one or more processes.

11. Carrier means carrying computer readable codes for controlling a computer to perform the method of claim 10.
